# EUROPEAN PATENT APPLICATION

(11) **EP 4 678 363 A1**
(43) Date of publication of application: **14.01.2026**
(21) Application number: 24187788.5
(22) Date of filing: 10.07.2024
(51) Int. Cl.: B27N 3/18, B27N 3/20, B27N 5/02, B31B 50/20, B31B 50/59, B31F 1/00, B26D 7/26, B26F 1/44, B27N 3/04, B27N 3/08, B27N 3/12, B27N 5/00, B29C 43/00, B29C 43/04, B29C 43/40, B31B 110/20, B31B 120/00

(54) **METHOD AND APPARATUS FOR DRY MANUFACTURING RIGID CELLULOSE PRODUCTS**

(71) Applicant: Yangi AB, 432 48 Varberg (SE)
(72) Inventor: JONSSON, Mikael, 432 40 VARBERG (SE)
(74) Representative: Brann AB

(57) **Abstract**

The present invention relates to a method for dry manufacturing rigid cellulose products. A rim portion press-surface (29a) of a first mould part (18) is arranged opposite a rim portion press-surface (25a) of a second mould part (19) in order to press the rim portion of the cellulose product therebetween, wherein a cutter body (32) is displaceable in the axial direction in relation to the rim portion press-surface (29a) of the first mould part (18) and the rim portion press-surface (25a) of the second mould part (19) between a retracted position and an extended position. The method comprises the steps of: engaging the rim portion on opposite sides by the rim portion press-surface (29a) of the first mould part (18) and the rim portion press-surface (25a) of the second mould part (19), displacing the cutter body (32) of the second mould part (19) in relation to the first mould part (18), in order to cut-off residual cellulose material located radially outside the rim portion, and thereafter final pressing of the rim portion into final rigid shape between the rim portion press-surface (29a) of the first mould part (18) and the rim portion press-surface (25a) of the second mould part (19).

## Description

### Technical field of the Invention

The present invention relates in general to the field of method and apparatus for dry manufacturing of rigid cellulose products having non-flat general shape from a cellulose blank substrate. Such cellulose products may be used for packaging, storing, transporting and/or displaying other products such as electronics, tools, jewelry, food, dairy products, cosmetics, etc., and/or may be used as single/multiple use disposable articles. The method and apparatus are especially defined to provide cellulose products having distinct and well-defined rim. By cellulose products means products that mainly consists of the cellulose part of organic matter.

The present invention relates specifically to an apparatus for dry manufacturing rigid cellulose products, wherein the cellulose product comprises a main portion and a circumferential rim portion surrounding said main portion, wherein the apparatus comprises a product forming unit. The product forming unit comprises a moulding tool having a first mould part and a second mould part, wherein at least one of the first mould part and the second mould part is displaceable in the axial direction in relation to the other, wherein the first mould part comprises a rim portion press-surface and the second mould part comprises a rim portion press-surface, said rim portion press-surface of the first mould part being arranged opposite the rim portion press-surface of the second mould part in order to press the rim portion of the cellulose product therebetween, and wherein the first mould part comprises a central mould body having the rim portion press-surface of the first mould part. The present invention also relates to a method for dry manufacturing rigid cellulose products using such apparatus.

### Background of the Invention

There are many situations where it is desirable to provide two-dimensional (2D) or three-dimensional (3D) shaped objects made of sustainable materials, such as biomaterials, instead of using plastic/polymer materials. A biomaterial commonly used for packaging and disposable articles is wet moulded pulp based on cellulose fibres. Such wet moulded pulp has the advantage of being considered a sustainable material, since it is produced from biomaterials and can be recycled after use. Wet moulded pulp comprises more or less only water and separated cellulose fibers, and consequently, wet moulded pulp has been popular to use for primary packaging applications (packaging next to the article), for secondary packaging applications (assembly of such primary packages), as well as for manufacturing of disposable articles/products.

However, a common disadvantage with all wet-forming techniques is the need for large amounts of water during the preparations of the cellulose pulp and the need for drying during the manufacturing/moulding of the product, which is a time and energy consuming step leading to low production speed and substantial high investment cost in machines and tooling. Meaning that the wet-forming techniques are not feasible to replace fossil-based alternatives neither in small nor large scale production of rigid cellulose products. Thereto, the aesthetical and mechanical properties of a wet-moulded cellulose product are hard to control with desirable precision, due to un-uniform cellulose pulp and due to the wet moulding manufacturing technique *per se.*

Therefore many actors/companies, starting a few decades ago, have changed their focus and investments towards dry-forming techniques wherein rigid cellulose products are manufactured from separated cellulose fibres that are introduced into a product forming unit in the shape of a dry cellulose blank/web, wherein the cellulose blank is formed/moulded into the shape of the intended cellulose product and wherein the cellulose fibres are bonded to each other using heat and pressure. The dry-forming techniques comprises different steps of generating an air-laid cellulose blank, that is fed into a product forming unit, i.e. thermo-forming press.

The technical field of dry manufacturing rigid cellulose products having essentially non-flat general shape, such as trays, lids, or the like, i.e. wherein the forming/pressing is performed in one step using a moulding tool having a first/female mould part and a second/male mould part configured to cooperate with each other, is well known. However, when producing rigid cellulose products by means of dry manufacturing (thermo-forming) the edges are usually trimmed in order to obtain a nice aesthetic appearance. However, high precision of the mechanical properties of the edges/rims of the cellulose product may be hard to reach, i.e. the edges/rims may become frayed and sensitive to absorb moisture. There is also a problem of loose fibres originating from the trimmed edge/rim.

EP3992360 discloses a method for trimming the edge/rim of a thermo-formed cellulose product, wherein the cutting is a crush-cut, i.e. a cutting edge of one mould part acts against an anvil plate of the other mould part. WO 2023/194032 also discloses a method for trimming the edge/rim of a thermo-formed cellulose product, wherein the cutting is a crush-cut. The cutting edge will wear rapidly, and the edge/rim of the cellulose product will actually burst apart instead of being cut. Thereto, the local force needed to cut the edge/rim by crush-cut will miscolour the final rim of the cellulose product.

EP3882167 discloses a method for trimming the edge/rim of a thermo-formed cellulose product, wherein the cutting is performed concurrently with the closing of the mould by means of the mould parts, i.e. in the same press motion as when forming the cellulose product in the forming mould.

According to the above prior art. When the cutting edge engage the cellulose blank before the cellulose blank obtains its final shape, i.e. before it is fully pre-shaped before final pressing, or cutting is performed before the cellulose blank obtains its final shape, there is material draw after the cutting is initiated/performed and the final rim will be frayed and un-defined.

Thus, the sub-technical field of trimming/cutting-off the residual cellulose material from the rim portion of the cellulose product, is still exposed to challenges.

There is a need in the art for a reliable, cheap and unharmful dry-forming technique/ process for dry manufacturing rigid cellulose products having non-flat general shape having distinct and well-defined rim.

### Object of the Invention

The present invention aims at obviating the aforementioned and other disadvantages and failings of previously known methods and apparatus for dry manufacturing rigid cellulose products, and at providing an improved method and apparatus for dry manufacturing rigid cellulose products having non-flat general shape having distinct and well-defined rim.

A primary object of the present invention is to provide an improved method and apparatus for dry forming/manufacturing rigid cellulose products having non-flat general shape, wherein the environmental benefits as well as time and energy saving benefits of conventional dry-forming techniques are maintained. It is another object of the present invention to provide an improved method and apparatus for dry forming/manufacturing rigid cellulose products having non-flat general shape, wherein the final rim of the cellulose product has the desired aesthetic and mechanical properties.

### Summary of the Invention

According to the invention at least the primary object is attained by means of the initially defined method and apparatus having the features defined in the independent claims. Preferred embodiments of the present invention are further defined in the dependent claims.

According to a first aspect of the present invention, there is provided an apparatus according to the initially defined type, wherein the second mould part comprises a central mould body having the rim portion press-surface of the second mould part, and a cutter body surrounding the central mould body and having a circumferential cutting edge located adjacent the rim portion press-surface of the central mould body, and the cutter body being displaceable in the axial direction in relation to the central mould body between a retracted position and an extended position, and wherein the cutter body is biased towards the retracted position. The cutter body of the second mould part is configured to cut-off residual cellulose material from the rim portion of the cellulose product after the rim portion press-surface of the first mould part and the rim portion press-surface of the second mould part engage opposite sides of the rim portion of the cellulose product, having the cutter body located in the retracted position, and wherein the cutter body is configured to be positioned in the extended position before the rim portion press-surface of the first mould part and the rim portion press-surface of the second mould part press the rim portion of the cellulose product into final rigid shape therebetween.

According to a second aspect of the present invention, there is provided a method for dry manufacturing rigid cellulose products having non-flat general shape from a cellulose blank substrate. The method utilizes such apparatus and comprises the steps of:
- providing a cellulose blank substrate into the moulding tool, wherein the rim portion of the cellulose product is in a non-final non-rigid shape,
- engaging the rim portion on opposite sides by the rim portion press-surface of the first mould part and the rim portion press-surface of the second mould part, having the cutter body positioned in the retracted position,
- displacing the cutter body of the second mould part in relation to the central mould body of the second mould part and towards the first mould part, in order to initiate cutting-off residual cellulose material located radially outside the rim portion of the cellulose product,
- displacing the cutter body to the extended position and passed the rim portion press-surface of the central mould body of the first mould part, in order to cut-off the residual cellulose material from the rim portion of the cellulose product, and
- thereafter final pressing of the rim portion of the cellulose product into final rigid shape between the rim portion press-surface of the first mould part and the rim portion press-surface of the second mould part.

Thus, the present invention is based on the insight of utilizing the following trim procedure/ concept: holding/fixating the rim, trimming/cutting the rim by means of shear-cut and thereafter final pressing of the rim. Thereby the final rim of the rigid cellulose product will be distinct and well-defined, i.e. obtains the desired aesthetic and mechanical properties. The rim will not delaminate due to the cutting/trimming, and the moisture is prevented from entering/damaging the rim. The holding/fixation of the rim before cutting/trimming prevents material draw after the cutting and also prevents crack formation at the rim portion of the cellulose product.

Thus, present invention provides the advantage that the cutting/trimming is not performed in the same press motion as the forming of the cellulose product, but is performed independently and thereby the cutting is performed when the mould has been closed and fixated the rim of the cellulose product. Thereto, the cutting force needed when performing a shear-cut is much less than the cutting force needed when performing a crush-cut and thereby no risk of miscolouring of the rim during the cutting/trimming. Thereto, the cutting force needed when performing a shear-cut of a non-final rim is much less than the cutting force needed when cutting a final/pressed rim. The final pressing of the rim, after the residual cellulose material is removed, i.e. pressing from three sides, provides optimal control of the sealing of the rim and the amount of loose cellulose fibres is significantly reduced or eliminated.

According to various embodiments of the present invention, the abutment force between the rim portion press-surface of the first mould part and the rim portion press-surface of the second mould part during the step of engaging the rim portion of the cellulose product, is in the range 0,05-0,5 times the pressing force between the rim portion press-surface of the first mould part and the rim portion press-surface of the second mould part during the final pressing of the rim portion of the cellulose product. Thereby there is no risk of miscolouring of the rim during the cutting/trimming.

According to various embodiments of the present invention, the circumferential cutting edge of the cutter body of the second mould part is in flush with the rim portion press-surface of the central mould body of the second mould part during the step of engaging the rim portion on opposite sides by the rim portion press-surface of the first mould part and the rim portion press-surface of the second mould part. Thereby, the cutting edge is protected when the cellulose blank substrate is provided into the moulding tool, and when the pressed cellulose product is removed from the moulding tool. Thereto, the cutting edge is prevented from engage the cellulose blank substrate before the rim is fixated and ready to be trimmed, thereby there is no material draw after trimming is initiated and the final rim is distinct and well-defined.

According to various embodiments of the present invention, the play in the radial direction between the central mould body of the second mould part and the cutter body of the second mould part is in the range 3,5-40 micrometres. Thereby, cellulose fibres are prevented from entering the interface between the central mould body and the cutter body, and thanks to the small gap the final rim of the cellulose product is distinct and well-defined and the risk of having a jammed cutter body is eliminated.

According to various embodiments of the present invention, the play in the radial direction between the central mould body of the first mould part and the cutter body of the second mould part is in the range 10-40 micrometres. Thereby, the final rim of the cellulose product is distinct and well-defined and free from burring.

Further advantages with and features of the invention will be apparent from the following detailed description of preferred embodiments.

### Brief description of the drawings

A more complete understanding of the abovementioned and other features and advantages of the present invention will be apparent from the following detailed description of preferred embodiments in conjunction with the appended drawings, wherein:
- Fig. 1: is a schematic illustration of a production line or apparatus for dry manufacturing rigid cellulose products,
- Fig. 2: is a schematic perspective view of a box/carton filled with inventive rigid cellulose products,
- Fig. 3: is a schematic illustration of a cellulose blank substrate,
- Fig. 4: is a schematic illustration of a moulding tool according to a first embodiment, wherein a cellulose blank substrate according to figure 3 is loaded between a first mould part and a second mould part of the moulding tool,
- Fig. 5: is a schematic illustration of the moulding tool according to figure 4, wherein the rim area of the cellulose product is fixated between the first mould part and the second mould part, and wherein the cutter body of the second mould part is in the retracted position,
- Fig. 6: is a schematic illustration of the moulding tool according to figures 4 and 5, wherein cutting-off residual material is initiated by displacing the cutter body of the second mould part in relation to the central mould body of the second mould part,
- Fig. 7: is a schematic illustration of the moulding tool according to figures 4-6, wherein cutting-off residual material is completed by displacing the cutter body of the second mould part to the extended position,
- Fig. 8: is a schematic illustration of the moulding tool according to figures 4-7, wherein final pressing of the rim portion of the cellulose product takes place,
- Fig. 9: is a schematic illustration of the moulding tool according to figures 4-8, wherein the moulding tool is opened and the rigid cellulose product is released,
- Fig. 10: is a schematic illustration of an example of a rigid cellulose product, wherein the cellulose product is constituted by a tray,
- Fig. 11: is a schematic illustration of a moulding tool according to a second embodiment, corresponding to figure 6,
- Fig. 12: is a schematic illustration of the moulding tool according to figure 11, corresponding to figure 7,
- Fig. 13: is a schematic illustration of the moulding tool according to figures 11 and 12, corresponding to figure 8,
- Fig. 14: is a schematic illustration of a moulding tool according to a third embodiment, corresponding to figure 4,
- Fig. 15: is a schematic illustration of the moulding tool according to figure 14, corresponding to figure 5,
- Fig. 16: is a schematic illustration of the moulding tool according to figures 14 and 15, corresponding to figure 7,
- Fig. 17: is a schematic illustration of the moulding tool according to figures 14-16, corresponding to figure 8, and
- Fig. 18: is a schematic illustration of the moulding tool according to figures 14-17, corresponding to figure 9.

### Detailed description of preferred embodiments of the invention

As used herein, the term "air/dry moulding/forming or air/dry laying/laid" means a well-known method according to which separated cellulose fibres are formed into a cellulose blank/sheet.

In air-laying technique, small/short fibres having a normal length in the range of 0,5 to 70 mm, for instance 1 to 10 mm, are separated and captured by an air stream/flow, and then laid on/applied to a forming mesh/surface, usually using a low pressure at the other side of the mesh/surface. The general terms "air/dry laying" and "air/dry moulding" are used interchangeably herein. The cellulose fibre carrying air flow may be generated by suitable device located upstream and/or downstream the forming mesh/surface.

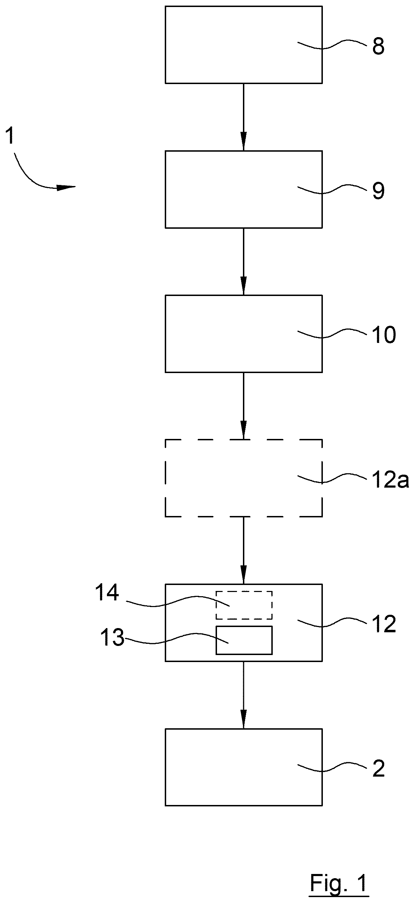

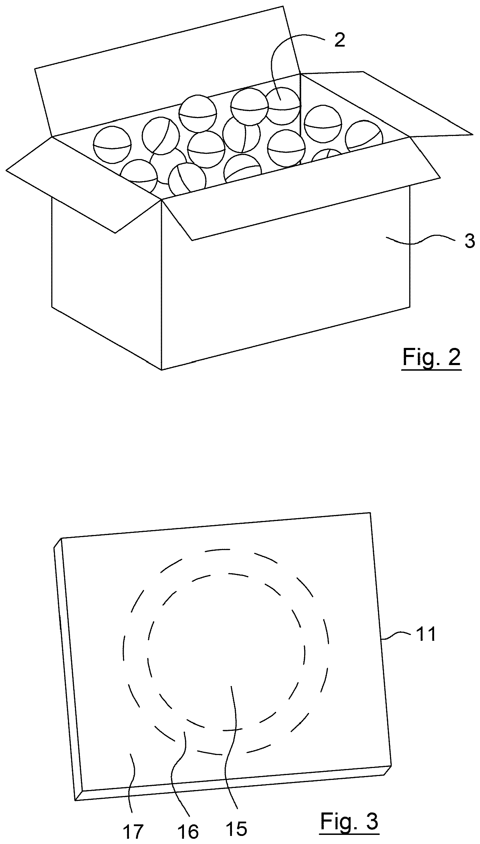

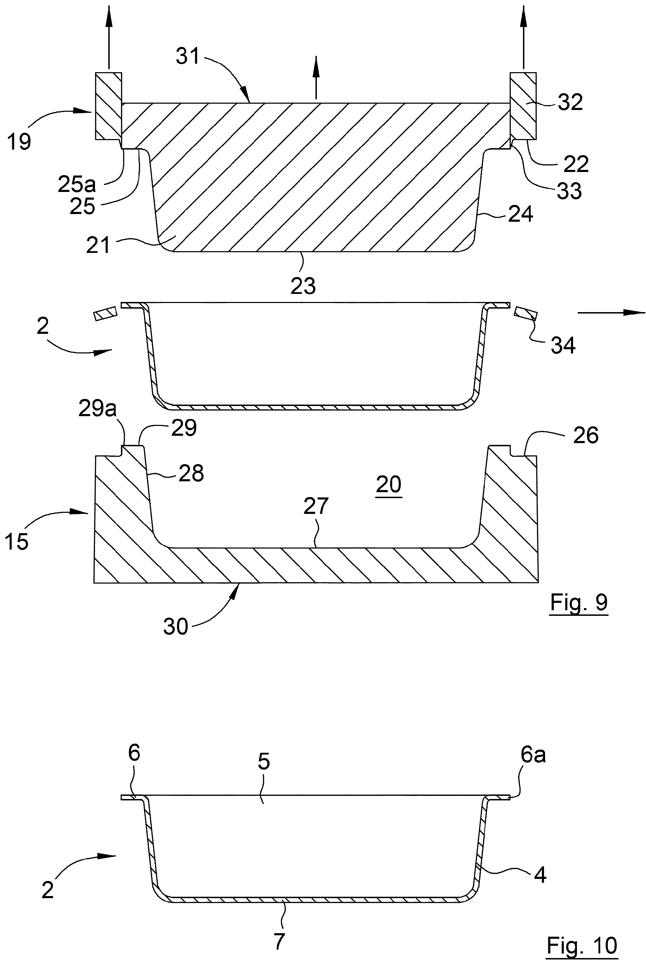

Reference is initially made to figures 1 and 10, wherein figure 1 disclose a schematic illustration of a generic production line/apparatus for dry manufacturing rigid cellulose products, wherein said apparatus is generally designated 1. The production line 1 is configured for manufacturing rigid cellulose products, generally designated 2, having essentially non-flat general shape from separated cellulose fibres. Such a production line 1 may be arranged and set-up according to different well-known ways. Figure 10 disclose an example of a rigid cellulose product/tray 2. Figure 2 disclose a box/carton 3 that is filled with inventive rigid cellulose products 2 having a spherical shape, in order to protect a transported article (not disclosed). The apparatus 1 may have automatic transfer/handling between the different process steps, and/or may have manual transfer/ handling between the different process steps, and thereto the apparatus 1 may have intermediate storing and/or additional process steps between the disclosed process steps, and/or the process steps may be located at different sites.

Figure 10 disclose an example of a rigid cellulose product 2 in the shape of a tray/container, wherein the tray is formed using the inventive method. The tray 2 has a main portion comprising an inclined circumferential wall 4 and an opening 5 defined by a circumferential rim/brim 6 connected to the upper/free end of the wall 4. According to figure 10 embodiment the brim 6 has an essentially radially extending upper surface, however it shall be pointed out that the cross-section of the brim 6 may have other shapes. At least the distal part of the brim 6, i.e. outer end, is constituted by a circumferential rim portion 6a surrounding the main portion of the cellulose product 2. According to various embodiments the entire brim 6 is constituted by said rim portion 6a.

The tray 2 may have truncated cone shape having straight wall 4, narrowing in the direction away from the opening 5, in accordance with figure 10 embodiment. The tray 2 may for instance have curved-shaped wall 4 seen in the axial plane. By having inclined walls 4 multiple trays 2 are stackable one inside the other when they are empty. The tray could also be a mug/cup, a lid, packaging or the like container/product. The cross section of the circumferential wall 4 in the radial plane may have any suitable shape, circular, oval, rectangular, polygonal, etc., and may differ in shape and/or dimension along the axial extension of the tray 2. The main portion of the tray 2 may comprise a bottom 7, wherein the bottom 7 is entirely flat or the bottom may comprise local ribs, projections, etc., for strength and rigidity of the cellulose product. The bottom 7 may be located at the very lower end of the wall 4, according to figure 10 embodiment, and/or be partly located at an axial distance from the lower end of the wall 4, or a combination thereof. The circumferential wall 4 is connected to and extends in the axial direction upwards from the bottom portion 7. According to various embodiments the cellulose product 2 does not have a distinct bottom, but the cellulose product 2 only comprises a wall 4, such as a cone or half sphere.

Cellulose raw material 8, i.e. comprising mainly the cellulose part of organic matter, is provided to the production line, and is fed to a separating/disintegrating unit 9 in order to obtain individualized/separated cellulose fibres. The separated cellulose fibres are thereafter transported by an air stream/flow to a dispenser of a cellulose blank/sheet forming unit 10. The cellulose fibres are laid by the dispenser on a moving or stationary perforated surface of the cellulose blank forming unit 10. The cellulose fibre carrying air flow may be generated by suitable device located upstream and/or downstream the perforated surface. Thereafter the generated cellulose blank, generally designated 11, is transported/transferred to a product forming unit 12, whereby rigid cellulose products 2 are formed and discharged from the product forming unit 12.

Figure 3 discloses one example of a cellulose blank 11, which is an examples of a discreate cellulose blank substrate. The cellulose blank forming unit 10 may be configured to generate a continuous cellulose blank/web 11 and/or discontinuous/discrete cellulose blank substrates 11. According to one embodiment, discontinuous/discrete cellulose blanks 1 are fed into the product forming unit 12.

The cellulose raw material 8 may be in the form of reeled pulp or paper, bale of cellulose pulp, paper, etc. and/or sheets of paper, cellulose pulp, etc. In case said cellulose raw material 8 is in the form of sheets and/or reeled pulp or paper, it can be fed directly into the separating unit 9. However, in case said cellulose raw material 8 is in the form of a bale or compact stacks of sheets, etc. one or more shredders and/or one or more additional separating/disintegrating units 9 may be necessary to be used for separating and dosing said cellulose raw material 8 from said bale or sheets in smaller quantities. The shredder(s) prepare cellulose raw material 8 to be accepted by said separating unit 9. The separating unit 9 disintegrates the cellulose raw material 8 into separated cellulose fibres. Said one or plurality of shredder(s) are arranged before said one or a plurality of separating unit(s) 9, so that an output of one of said shredder is connected to an input of one of said separating units 9. The shredders may be arranged in parallel to each other or in series with each other, and the disintegrating units 9 may be arranged in parallel to each other or in series with each other. The shredders and the disintegrating units 9 together constitute a cellulose fibre separating unit, arranged upstream the cellulose blank forming unit 10.

Said cellulose raw material 8 may be constituted by virgin cellulose fibres and/or recycled cellulose fibres and may originate from wood pulps such as kraft pulp, sulphite pulp, mechanical pulp, thermomechanical pulp (TMP), chemical treated mechanical pulp, chemi-thermomechanical pulp (CTMP), and/or from non-wood pulps such as bagasse, bamboo, abaca, hemp, flax, cotton.

The separating unit 9 may according to various embodiments be constituted by a hammer mill. In said separating unit 9 the cellulose raw material is separated into fibres having a normal length in the range of 0,5-70 mm, preferably less than 10 mm. The length of said fibres may be customized by adjusting the internal properties of the separating unit 9 and/or by choosing a different separating unit 9 and/or choosing different cellulose raw material 8. The fibre length for wood pulp is according to various embodiments in the range 0,5-4 mm, preferably in the range 1,7-3,6 mm. According to various embodiments the fibre length for non-wood pulp is in the range 0,5-70 mm.

The production line 1 may comprise a pre-compression and/or imprinting unit 12a, located downstream the cellulose blank forming unit 10 and upstream the product forming unit 12. In the pre-compression and/or imprinting unit 12a, an air-laid fluffy cellulose blank 11 having a first thickness may be compressed into a cellulose blank 11 having a second thickness, wherein said second thickness is thinner than said first thickness, and/or may be provided with an imprinting pattern. During the pre-compression/imprinting the cellulose blank is made more coherent and easier to handle, since the pre-compression/imprinting generates internal bindings between individual cellulose fibres preventing mutual separation of the cellulose fibres.

The product forming unit 12 comprises a press unit 13, and may optionally comprise a pre-heating unit 14 arranged upstream the press unit 13. According to various example embodiments said cellulose blank 11 may be heated to an elevated temperature before being fed into the press unit 13 of the product forming unit 12. In such embodiment(s) where the cellulose blank 11 is preheated before being fed into the press unit 13, said press unit 13 may or may not comprise heating. According to various example embodiment said press unit 13 may be a heated press unit 13 for heating said cellulose blank 11 during pressing. In the case of a heated press unit 13, preheating of said cellulose blank 11 using a pre-heating unit 14 is optional. According to various example embodiments preheating of the cellulose blank 11 in said pre-heating unit 14 may be combined with a heated press unit 13. Having a pre-heating unit 14 in combination with a heated press unit 13 will speed up the manufacturing process in the product forming unit 12, and improve the quality/rigidity of the final rigid cellulose product 2.

In the product forming unit 12 the cellulose blank substrate 11 is heated to a forming temperature T in the range 120 - 200 °C in order to obtain adequate rigidity and strength in the final cellulose product 2.

Reference is now especially made to figure 3. Figure 3 disclose a schematic cellulose blank substrate 11. The cellulose blank substrate 11 comprises a product main area 15 and a product rim area 16 located adjacent and surrounding the product main area 15. Outside the product rim area 16 the cellulose blank 11 comprises a scrap/residual area 17. It shall be pointed out that several cellulose products may be produced from one cellulose blank substrate 11, i.e. the cellulose blank 11 according to figure 3 having one product main area 15 may comprise a plurality of product main areas 15 and corresponding product rim areas 16. The product main area 15 of the cellulose blank 11 corresponds to the main portion of the cellulose product 2, and the product rim area 16 of the cellulose blank 11 corresponds to the rim portion 6a of the cellulose product 2.

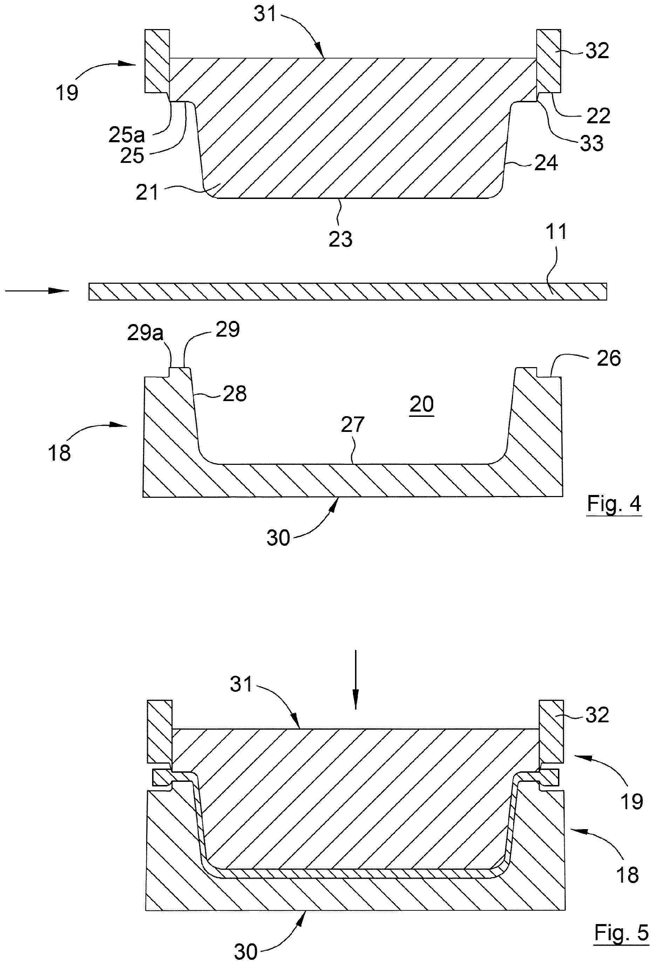

Reference is now also made to figures 4-9, disclosing a first illustrative embodiment of a moulding tool of the press unit 13 of the inventive apparatus 1. The moulding tool of the press unit 13 comprises a first mould part 18 and a second mould part 19 having co-operating designs, wherein at least one of the first mould part 18 and the second mould part 19 is/are displaceable in the axial direction in relation to each other, i.e. reciprocating back and forth in relation to each other, in order to exert pressure to the cellulose blank substrate 11 loaded therebetween. In the figures the mutual displacement is disclosed as being vertical, however the mutual displacement may be horizontal or any other suitable angle. The cellulose blank substrate 11 loaded into the moulding tool, is constituted by the air-laid cellulose blank 11. The air-laid cellulose blank 11 may be generated upstream the product forming unit 12 in the same apparatus/production line and provided/transferred to the product forming unit 12, or may be generated at a separate location and provided/transferred to the product forming unit 12 via intermediate handling and storage.

According to various embodiments the first mould part 18 of the moulding tool is a female mould part, i.e. having a main recess 20 for receiving a major part of the cellulose blank substrate 11, and the second mould part 19 of the moulding tool is a male mould part, i.e. having a main protrusion 21 for cooperation with said recess 20 of the female mould part by being inserted therein, such that the cellulose blank 11 is pressed into a final rigid non-flat shape by applying a predetermined forming pressure P in the axial direction of the moulding tool. According to the disclosed embodiment the male mould part 19 is located above the female mould part 18, but according to alternative embodiments the female mould part may be the second mould part and may be located above the male mould part which is then the first mould part. In the disclosed embodiment, the first mould part 18 is a negative mould part and the second mould part 19 is a positive mould part.

The male/second mould part 19 comprises a product press-surface and a scrap press-surface 22 adjacent said product press-surface. In the disclosed example embodiment, the product press-surface of the second mould part 19 comprises a bottom surface 23, a wall surface 24 connected to the bottom surface 23 and extending essentially in the axial direction, and a brim surface 25 connected to the wall surface 24 and extending essentially in the transversal/radial direction. According to various embodiments, the scrap press-surface 22 of the second mould part 19 surrounds the entire product press-surface. The female/first mould part 18 comprises a product press-surface and a scrap press-surface 26 adjacent said product press-surface. In the disclosed example embodiment, the product press-surface of the first mould part 18 comprises a bottom surface 27, a wall surface 28 connected to the bottom surface 27 and extending essentially in the axial direction, and a brim surface 29 connected to the wall surface 27 and extending essentially in the transversal/radial direction. According to various embodiments, the scrap press-surface 26 of the first mould part 18 surrounds the entire product press-surface. The scrap press-surface 26 of the first mould part 18 is arranged opposite the scrap press-surface 22 of the second mould part 19.

The product press-surface of the first mould part 18 comprises a rim portion press-surface 29a, that is the distal part of the brim surface 29 of the first mould part 18. The product press-surface of the second mould part 19 comprises a rim portion press-surface 25a, that is the distal part of the brim surface 25 of the second mould part 19. The rim portion press-surface 29a of the first mould part 18 is arranged opposite the rim portion press-surface 25a of the second mould part 19 in order to press the rim portion 6a of the cellulose product 2 therebetween.

The first mould part 18 comprises a central mould body 30 having the rim portion press-surface 29a of the first mould part 18. The second mould part 19 comprises a central mould body 31 having the rim portion press-surface 25a of the second mould part 19, and a cutter body 32 surrounding the central mould body 31 and having a circumferential cutting edge 33 located adjacent the rim portion press-surface 25a of the central mould body 31.

The cutter body 32 is displaceable in the axial direction in relation to the central mould body 31 of the second mould part 19 between a retracted position and an extended position, and wherein the cutter body 32 is biased towards the retracted position in relation to the central mould body 31. According to various embodiments, the cutter body 32 of the second mould part 19 is a rigid cutter body. The cutter body 32 is configured to cause a shear-cut together with the rim portion press-surface 29a of the central mould body 30 of the first mould part 18.

In figure 4, the cellulose blank substrate 11 is inserted into the open moulding tool, wherein the rim portion 6a of the cellulose product 2 is in a non-final non-rigid shape. Thus, the product rim area 16 of the cellulose blank substrate 11 is in non-final non-rigid shape. According to various embodiments, also the product main area 15 of the cellulose blank substrate 11 is in non-final non-rigid shape. The cutter body 32 is in the retracted position, and will not interfere with the loading of the cellulose blank substrate 11.

In figure 5, the moulding tool is closing, i.e. the second mould part 19 is displaced towards the first mould part 18, wherein the rim portion press-surface 29a of the first mould part 18 and the rim portion press-surface 25a of the second mould part 19 engage opposite sides of the rim portion 6a of the cellulose product 2. During the closing of the moulding tool, the cutter body 32 of the second mould part 19 is positioned in the retracted position. Thereby, the rim portion 6a is fixated but not fully compressed. According to various embodiments, during the closing of the moulding tool, the cellulose blank substrate 11 is pre-formed by the central mould body 30 of the first mould part 18 and the central mould body 31 of the second mould part 19.

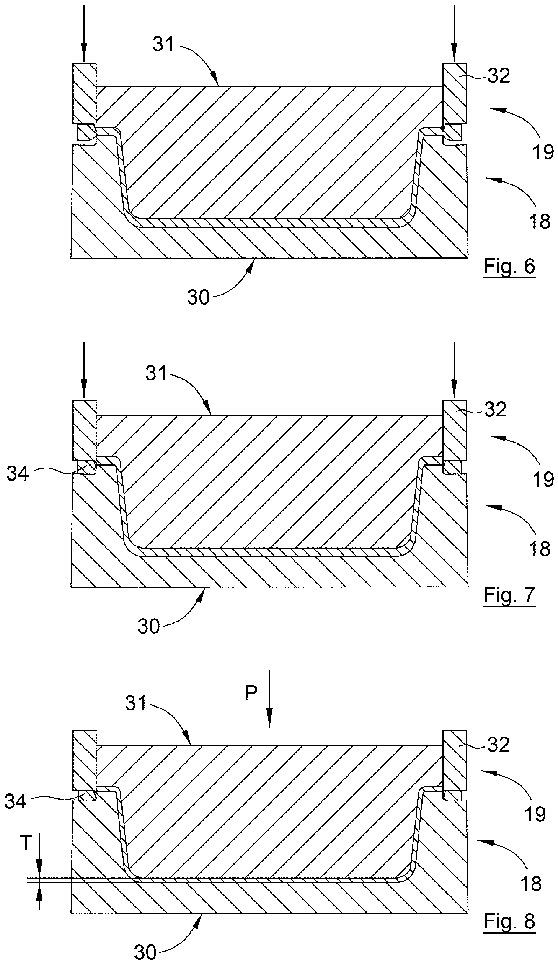

In figure 6, the cutter body 32 of the second mould part 19 is displaced in relation to the central mould body 31 of the second mould part 19 and towards the first mould part 18, in order to initiate cutting-off residual cellulose material located radially outside the rim portion 6a of the cellulose product 2, i.e. the cutting edge 33 of the cutter body 32 enter into the cellulose blank substrate 11. Thus, the initiation of the cutting-off residual cellulose material takes place when the rim portion 6a is not fully compressed. During the initiation of the cutting-off, the central mould body 31 of the second mould part 19 is essentially stationary in relation to the central mould body 30 of the first mould part 18, i.e. not moving or the movement is negligible in relation to the displacement of the cutter body 32.

In figure 7, the cutter body 32 is displaced to the extended position in relation to the central body 32 of the second mould part 19 and passed the rim portion press-surface 29a of the central mould body 30 of the first mould part 18, in order to cut-off the residual cellulose material from the rim portion 6a of the cellulose product 2, i.e. the cutting edge 33 of the cutter body 32 passes through the cellulose blank substrate 11 and the scrap 34 is separated from the cellulose product 2. Thus, cutting-off residual cellulose material takes place when the rim portion 6a is not fully compressed. During the cutting-off, the central mould body 31 of the second mould part 19 is essentially stationary in relation to the central mould body 30 of the first mould part 18, i.e. not moving or the movement is negligible in relation to the displacement of the cutter body 32. Thus, the scrap 34 is removed in a process step separated from the press motion of the moulding tool.

In figure 8, after cutting-off the scrap 34, final pressing of the rim portion 6a of the cellulose product 2 into final rigid shape between the rim portion press-surface 29a of the first mould part 18 and the rim portion press-surface 25a of the second mould part 19 takes place. Thereby the rim portion 6a is distinctly formed between the rim portion press-surface 29a of the first mould part 18, the rim portion press-surface 25a of the second mould part 19 and the cutter body 32. During the final pressing of the rim portion 6a the predetermined forming pressure P is applied. According to various embodiments the entire product main area 15 of the cellulose blank substrate 11 is concurrently pressed between the product press-surface of the second mould part 19 and the product press-surfaces of the first mould part 18 into final shape. The mutual distance, taken perpendicular to the surface in question, between the product press-surface of the first mould part 18 and the product press-surface of the second mould part 19 during the pressing of the cellulose blank substrate 11 is X millimetres, wherein X preferably is in the range 0,2-2,5 millimetres, i.e. equal to the thickness of the bottom 7 of the pressed cellulose product 2. Preferably, X is in the range 0,3-1,5 millimetres. The wall surfaces 24, 28 of the moulding tool has to be inclined in order to obtain a release angle for the cellulose product, and in order to obtain adequate press force to the wall region 4 of the cellulose product 2.

According to the disclosed embodiment. At the scrap area of the moulding tool, the mutual distance between the scrap press-surface 26 of the first mould part 18 and the scrap press-surface 22 of the second mould part 19 is equal to or more than the mutual distance between the product press-surface of the first mould part 18 and the product press-surface pf the second mould part 19. The part of the cellulose blank 11 located at the scrap area may be left entirely uncompressed in the moulding tool, be partially compressed by applying a predetermined partial pressure less than said predetermined forming pressure P, or be fully compressed by applying said predetermined forming pressure P.

In figure 9, the cellulose product 2 is released and schematically removed from the moulding tool by opening the moulding tool. In connection with the opening of the moulding tool, the cutter body 32 is returned to the retraced position in relation to the central mould body 31 of the second mould part 19. Figure 10 disclose a schematic illustration of a cellulose tray 2 wherein the scrap 34 is removed from the cellulose tray 2.

According to various embodiments. When the compartment of the rigid cellulose tray 2 is filled with objects, a film/cover/lid may be attached to the circumferential rim/brim 6 of the cellulose tray 2, for instance using heat lamination. The lid film may be constituted by a multilayer film comprising polymer, metal, and/or paper.

According to various embodiments. Before any items are placed in the compartment of the rigid cellulose tray, the rigid cellulose tray 2 may be provided with a liner film adhered to at least to the circumferential rim/brim 6, and preferably also to the wall 4 and/or the bottom 7 of the cellulose tray 2. The liner film may be constituted by a multilayer film comprising polymer and/or metal. The adhesion of the liner film to the tray is preferably heat activated.

According to various embodiments, the cellulose blank 11 may comprise barrier additives and/or material property enhancing additives, etc., such that the rigid cellulose tray 2 withstand grease, fat, water, vapour, etc. The additives are preferably provided to the cellulose fibers upstream the disintegrating unit 9 or between the disintegrating unit 9 and the product forming unit 12.

The predetermined forming pressure P is in the range 40-10000N/cm², preferably in the range 100-4000N/cm². According to various embodiments said predetermined pressures are above 1000 N/ cm², and according to various embodiments said predetermined pressures are below 3000 N/ cm². The holding time during the pressing step is in equal to or more than 1 second and equal to or less than 10 seconds, preferably less than 5 seconds, and most preferably less than 3 seconds.

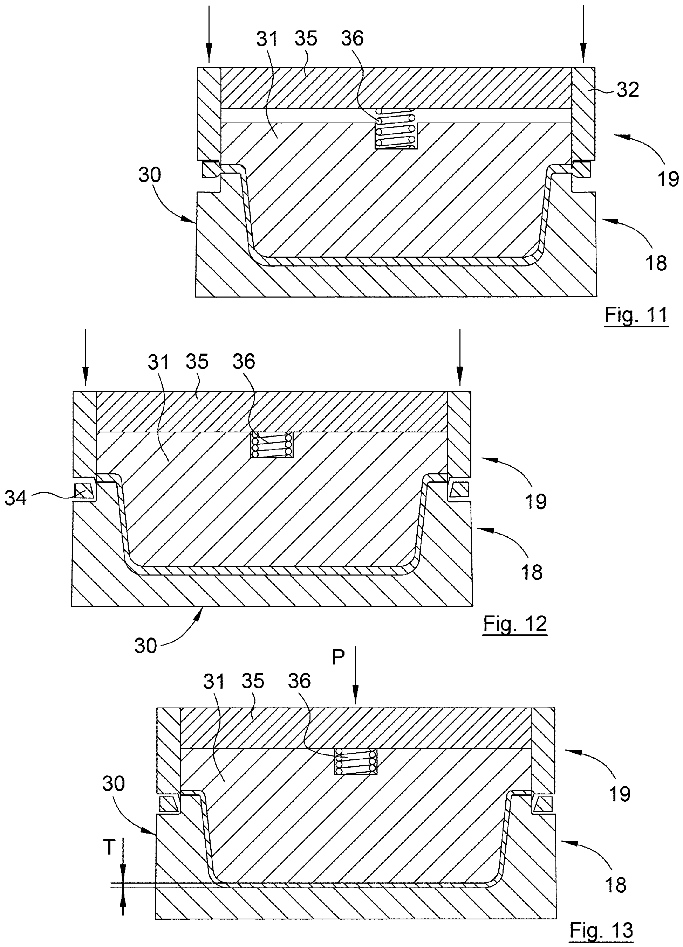

Reference is now made to figures 11-13, disclosing a second illustrative embodiment of a moulding tool of the press unit 13 of the inventive apparatus 1. Figures 11-13 corresponds to figures 6-8, and only differences will be described in detail. Corresponding/equivalent elements have the same reference/term.

The second mould part 19 comprises a base body 35, wherein the cutter body 32 is fixedly connected to base body 35. Thereto, the second mould part 19 comprises a spring element 36 located between the base body 35 and the central mould body 31, wherein the cutter body 32 is biased towards the retracted position in relation to the central mould body 31 of the second mould part 19. The spring force of the spring element 36 is lower than the inherent counterforce from the cellulose blank substrate 11.

In figure 11, the base body 35 and the cutter body 32 of the second mould part 19 is displaced in relation to the central mould body 31 of the second mould part 19 and towards the first mould part 18, in order to initiate cutting-off residual cellulose material located radially outside the rim portion 6a of the cellulose product 2, i.e. the spring element starts to compress. The initiation of the cutting-off residual cellulose material takes place when the rim portion 6a is not fully compressed. During the initiation of the cutting-off, the central mould body 31 of the second mould part 19 is essentially stationary in relation to the central mould body 30 of the first mould part 18, i.e. not moving or the movement is negligible in relation to the displacement of the cutter body 32.

In figure 12, the cutter body 32 is displaced to the extended position in relation to the central mould body 31 of the second mould part 19 and passed the rim portion press-surface 29a of the central mould body 30 of the first mould part 18, in order to cut-off the residual cellulose material from the rim portion 6a of the cellulose product 2. Thereby, the base body 35 engage/contact the central mould body 31 and the spring element 36 is fully compressed. The cutting-off residual cellulose material takes place when the rim portion 6a is not fully compressed. During the cutting-off, the central mould body 31 of the second mould part 19 is essentially stationary in relation to the central mould body 30 of the first mould part 18, i.e. not moving or the movement is negligible in relation to the displacement of the cutter body 32.

In figure 13, after cutting-off the scrap 34, final pressing of the rim portion 6a of the cellulose product 2 into final rigid shape between the rim portion press-surface 29a of the first mould part 18 and the rim portion press-surface 25a of the second mould part 19 takes place. Thereby the rim portion 6a is distinctly formed between the rim portion press-surface 29a of the first mould part 18, the rim portion press-surface 25a of the second mould part 19 and the cutter body 32. During the final pressing of the rim portion 6a the predetermined forming pressure P is applied.

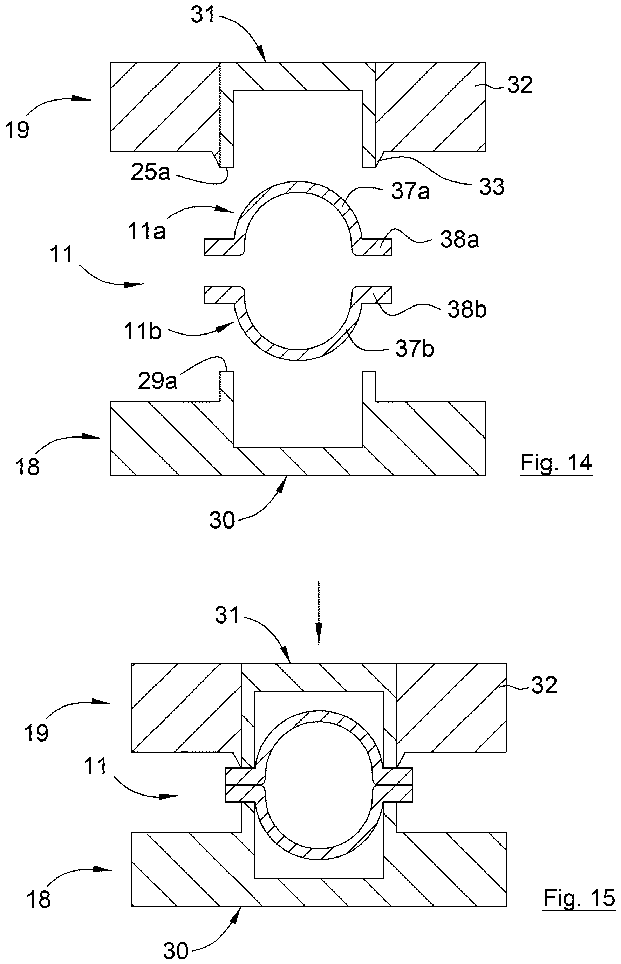

Reference is now made to figures 14-18, disclosing a third illustrative embodiment of a moulding tool of the press unit 13 of the inventive apparatus 1. Figures 14-18 corresponds to figures 4-5 and 7-9, and only differences will be described in detail. According to this embodiment, the cellulose blank substrate 11 is different in relation to the first and second embodiments disclosed above, and the moulding tool is different in relation to the first and second embodiments disclosed above. Still, corresponding/equivalent elements have the same reference/term.

The cellulose blank substrate 11 is constituted by two pre-formed cellulose blank sub-substrates 11a, 11b. The upper sub-substrate 11a is constituted by an air-laid cellulose blank, which is partly pre-pressed. More precisely, the product main portion 37a of the upper sub-substrate 11a is pressed into final rigid shape in a conventional manner between two cooperating mould parts, and during the pressing of the product main portion 37a of the upper sub-substrate 11a, the product rim portion 38a is kept in a non-final non-rigid shape, i.e. whereby the product rim portion 38a is un-compressed or only partially compressed when the product main portion 37a is pressed into final rigid shape. The lower sub-substrate 11b is constituted by an air-laid cellulose blank, which is partly pre-pressed. More precisely, the product main portion 37b of the lower sub-substrate 11b is pressed into final rigid shape in a conventional manner between two cooperating mould parts, and during the pressing of the product main portion 37b of the lower sub-substrate 11b, the product rim portion 38b is kept in a non-final non-rigid shape, i.e. whereby the product rim portion 38b is un-compressed or only partially compressed when the product main portion 37b is pressed into final rigid shape. The final cellulose product 2 will have an internal cavity, which is accomplished when the two pre-formed sub-substrates are joined together in an inventive moulding tool.

In figure 14, the moulding tool of the press unit 13 comprises a first mould part 18 and a second mould part 19, wherein at least one of the first mould part 18 and the second mould part 19 is/are displaceable in the axial direction in relation to each other, i.e. reciprocating back and forth in relation to each other, in order to exert pressure to the cellulose blank substrate 11 loaded therebetween. In the disclosed third embodiment the first mould part 18 is a negative/female mould part and the second mould part 19 is also a negative/female mould part, wherein the pre-pressed product main portion 37a of the upper sub-substrate 11a and the pre-pressed product main portion 37b of the lower sub-substrate 11b are not pressed in the inventive moulding tool, i.e. the product main area 37a, 37b of the cellulose blank substrate 11 is in final rigid shape.

In figure 14, the cellulose blank substrate 11, i.e. the upper cellulose blank sub-substrate 11a and the lower cellulose blank sub-substrate 11b, is inserted/provided into the open moulding tool, wherein the rim portion 6a of the cellulose product 2 is in a non-final non-rigid shape. Thus, the product rim area 38a, 38b of the cellulose blank substrate 11 is in non-final non-rigid shape.

The first mould part 18 comprises a central mould body 30 having the rim portion press-surface 29a of the first mould part 18. The second mould part 19 comprises a central mould body 31 having the rim portion press-surface 25a of the second mould part 19, and a cutter body 32 surrounding the central mould body 31 and having a circumferential cutting edge 33 located adjacent the rim portion press-surface 25a of the central mould body 31. The cutter body 32 is displaceable in the axial direction in relation to the central mould body 31 of the second mould part 19 between a retracted position and an extended position, and wherein the cutter body 32 is biased towards the retracted position.

According to various embodiments the upper sub-substrate 11a and the lower sub-substrate 11b are loaded/inserted into the moulding tool separately, and according to other embodiments the sub-substrate 11a and the sub-substrate 11b are loaded/inserted together.

In figure 15, the moulding tool is closing, i.e. the second mould part 19 is displaced towards the first mould part 18, wherein the rim portion press-surface 29a of the first mould part 18 and the rim portion press-surface 25a of the second mould part 19 engage opposite sides of the rim portion 6a of the cellulose product 2, and the product rim area 38a of the first/upper sub-substrate 11a is in contact with the product rim area 38b of the second/lower sub-substrate 11b, and the product main area 37a of the upper sub-substrate 11a is placed in overlapping configuration with the product main area 37b of the lower sub-substrate 11b.

During the closing of the moulding tool, the cutter body 32 of the second mould part 19 is positioned in the retracted position. Thereby, the rim portion 6a is fixated but not fully compressed.

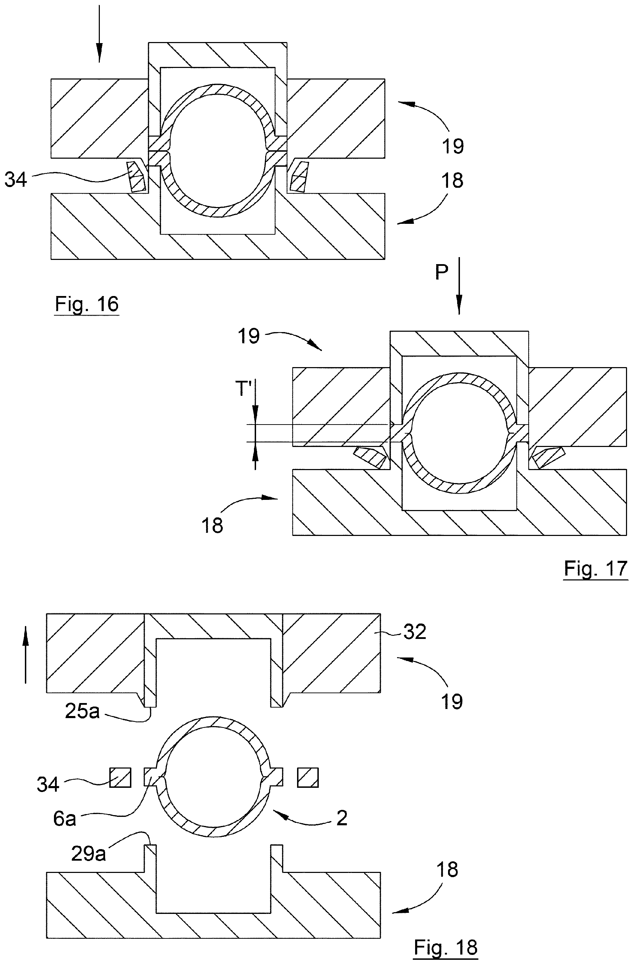

In figure 16, the cutter body 32 of the second mould part 19 is displaced in relation to the central mould body 31 of the second mould part 19 and towards the first mould part 18, i.e. the cutter body 32 is displaced to the extended position and passed the rim portion press-surface 29a of the central mould body 30 of the first mould part 18, in order to cut-off the residual cellulose material from the rim portion 6a of the cellulose product 2, i.e. the cutting edge 33 of the cutter body 32 passes through the cellulose blank substrate 11 and the scrap 34 is separated from the cellulose product 2. Thus, cutting-off residual cellulose material takes place when the rim portion 6a is not fully compressed. During the cutting-off, the central mould body 31 of the second mould part 19 is essentially stationary in relation to the central mould body 30 of the first mould part 18, i.e. not moving or the movement is negligible in relation to the displacement of the cutter body 32. Thus, the scrap 34 is removed in a process step separated from the press motion of the moulding tool.

In figure 17, after cutting-off the scrap 34, final pressing of the rim portion 6a of the cellulose product 2 into final rigid shape between the rim portion press-surface 29a of the first mould part 18 and the rim portion press-surface 25a of the second mould part 19 takes place. Thereby the rim portion 6a is distinctly formed between the rim portion press-surface 29a of the first mould part 18, the rim portion press-surface 25a of the second mould part 19 and the cutter body 32. During the final pressing of the rim portion 6a the predetermined forming pressure P is applied. The mutual distance, taken perpendicular to the surface in question, between the rim portion press-surface 29a of the first mould part 18 and the rim portion press-surface 25a of the second mould part 19 during the pressing of the cellulose blank substrate 11 is T' millimetres, wherein T' preferably is in the range 0,2-2,5 millimetres. Preferably, T' is in the range 0,3-1,5 millimetres. During the joining/bonding of the final rigid rim becomes homogenous.

According to the disclosed embodiment. At the scrap area of the moulding tool, the mutual distance between the scrap press-surface 26 of the first mould part 18 and the scrap press-surface 22 of the second mould part 19 is equal to or more than the mutual distance between the product press-surface of the first mould part 18 and the product press-surface pf the second mould part 19. The part of the cellulose blank 11 located at the scrap area may be left entirely uncompressed in the moulding tool, be partially compressed by applying a predetermined partial pressure less than said predetermined forming pressure P, or be fully compressed by applying said predetermined forming pressure P. Having uncompressed or partially compressed scrap 34 makes the residual material easier to recycle.

In figure 18, the cellulose product 2 is released and schematically removed from the moulding tool by opening the moulding tool. In connection with the opening of the moulding tool, the cutter body 32 is returned to the retraced position in relation to the central mould body 31 of the second mould part 19. The internal cavity of the cellulose product 2 is delimited by the product main area 37a of the upper sub-substrate 11a and the product main area 37b of the lower sub-substrate 11b.

According to various embodiments, before the step of placing the product rim area 38a of the upper sub-substrate 11a in contact with the product rim area 38b of the lower sub-substrate 11b, a liquid composition comprising cellulose or starch may be applied to at least one of the product rim area 38a of the upper sub-substrate 11a and the product rim area 38b of the lower sub-substrate 11b. The liquid composition is preferably constituted by cellulose fibres that are wetted/dampened by water. Alternatively, only water is applied to at least one of the product rim area 38a of the upper sub-substrate 11a and the product rim area 38b of the lower sub-substrate 11b.

The rigid cellulose product 2 having an internal cavity may have many different shapes/cross-sections. The two halves/sub-substrates may have the same or different shapes of the product main area. The rigid cellulose product 2 illustrated in figure 18 may be roto-symmetrical about a vertical axis or may have oblong shape extending into to paper.

According to various embodiments of the present invention, the abutment force between the rim portion press-surface 29a of the first mould part 18 and the rim portion press-surface 25a of the second mould part 19 during the step of engaging the rim portion 6a of the cellulose product 2, is in the range 0,05-0,5 times the pressing force between the rim portion press-surface 29a of the first mould part 18 and the rim portion press-surface 25a of the second mould part 19 during the final pressing of the rim portion 6a of the cellulose product 2. Preferably in the range 0,1-0,3. Thereby, the clamping force fixating the rim portion 6a of the cellulose product 2 during cutting-off residual material is big enough to fixate/hold the rim portion 6a but still low enough not to compress the cellulose blank substrate 11, whereby the force needed to cut-off residual material is significantly decreased in relation to cutting-off fully compressed scrap material.

According to various embodiments, the circumferential cutting edge 33 of the cutter body 32 of the second mould part 19 is in flush with the rim portion press-surface 29a of the central mould body 30 of the first mould part 18 during the step of engaging the rim portion 6a on opposite sides by the rim portion press-surface 29a of the first mould part 18 and the rim portion press-surface 25a of the second mould part 19. Thereby the interface between the envelope surface of the central mould body 31 and the cutter body 32 is protected from being damaged, and the cutting edge 33 is protected from being damaged.

According to various embodiments, the play in the radial direction between the central mould body 31 of the second mould part 19 and the cutter body 32 of the second mould part 19 is in the range 3,5-40 micrometres, preferably 3,5-30 micrometres. The term play means the distance between the opposite surfaces, i.e. also known as gap. Thereby, loose cellulose fibres are prevented from entering into the interface between the envelope surface of the central mould body 31 and the cutter body 32, which otherwise may have negative effect on the displaceability of the cutter body 32. Preferably there is a particle-filled lubricant in the gap in order to help to centre the elements in relation to each other, such as copper-paste.

According to various embodiments, the play in the radial direction between the central mould body 30 of the first mould part 18 and the cutter body 32 of the second mould part 19 is in the range 10-40 micrometres, preferably 10-30 micrometres. The term play means the distance between the opposite surfaces, i.e. also known as gap. Thereby, it is a clear and distinct cut, and the final rim portion 6a of the pressed cellulose product 2 is free from burring. Preferably there is a particle-filled lubricant in the gap in order to help to centre the elements in relation to each other, such as copper-paste. Preferably the moulding tool has guide pins/bores the first mould part and the second mould part.

According to various embodiments, such as the one disclosed in figures 14-18, the surface of the central mould body 30 of the first mould part 18 corresponding to the main portion of the cellulose product 2 is constituted by a negative mould surface, and wherein the surface of the central mould body 31 of the second mould part 19 corresponding to the main portion of the cellulose product 2 is constituted by a negative mould surface.

According to various embodiments, such as the ones disclosed in figures 4-9 and 11-13, the surface of the central mould body 30 of the first mould part 18 corresponding to the main portion of the cellulose product 2 is constituted by a negative mould surface, and wherein the surface of the central mould body 31 of the second mould part 19 corresponding to the main portion of the cellulose product 2 is constituted by a positive mould surface.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and the equivalents thereof. Thus, the equipment may be modified in all kinds of ways within the scope of the appended claims.

Throughout this specification and the claims which follows, unless the context requires otherwise, the word "comprise", and variations such as "comprises" or "comprising", will be understood to imply the inclusion of a stated integer or steps or group of integers or steps but not the exclusion of any other integer or step or group of integers or steps.

It shall also be pointed out that it shall be considered understood that features from a specific embodiment disclosed herein can be combined with and/or exchanged by features from another embodiment and the combination obvious, even though not expressly taught, when the combination and/or exchange is possible.

## Claims

1. Method for dry manufacturing rigid cellulose products (2) having essentially non-flat general shape from a cellulose blank substrate (11), the cellulose product (2) comprising a main portion and a circumferential rim portion (6a) surrounding said main portion,
- wherein the method utilizes a product forming unit (12) that comprises a moulding tool having a first mould part (18) and a second mould part (19), wherein at least one of the first mould part (18) and the second mould part (19) is displaceable in the axial direction in relation to the other, wherein the first mould part (18) comprises a rim portion press-surface (29a) and the second mould part (19) comprises a rim portion press-surface (25a), said rim portion press-surface (29a) of the first mould part (18) being arranged opposite the rim portion press-surface (25a) of the second mould part (19) in order to press the rim portion (6a) of the cellulose product (2) therebetween,
- wherein the second mould part (19) comprises a central mould body (31) having the rim portion press-surface (25a) of the second mould part (19), and a cutter body (32) surrounding the central mould body (31) and having a circumferential cutting edge (33) located adjacent the rim portion press-surface (25a) of the central mould body (31), the cutter body (32) being displaceable in the axial direction in relation to the central mould body (31) between a retracted position and an extended position, and wherein the cutter body (32) is biased towards the retracted position,
- wherein the first mould part (18) comprises a central mould body (30) having the rim portion press-surface (29a) of the first mould part (18),
the method comprising the steps of:
- providing a cellulose blank substrate (11) into the moulding tool, wherein the rim portion (6a) of the cellulose product (2) is in a non-final non-rigid shape,
- engaging the rim portion (6a) on opposite sides by the rim portion press-surface (29a) of the first mould part (18) and the rim portion press-surface (25a) of the second mould part (19), having the cutter body (32) positioned in the retracted position,
- displacing the cutter body (32) of the second mould part (19) in relation to the central mould body (31) of the second mould part (19) and towards the first mould part (18), in order to initiate cutting-off residual cellulose material located radially outside the rim portion (6a) of the cellulose product (2),
- displacing the cutter body (32) to the extended position and passed the rim portion press-surface (29a) of the central mould body (30) of the first mould part (18), in order to cut-off the residual cellulose material from the rim portion (6a) of the cellulose product (2), and
- thereafter final pressing of the rim portion (6a) of the cellulose product (2) into final rigid shape between the rim portion press-surface (29a) of the first mould part (18) and the rim portion press-surface (25a) of the second mould part (19).

2. The method according to claim 1, wherein the cutter body (32) of the second mould part (19) is a rigid cutter body, causing a shear-cut together with the rim portion press-surface (29a) of the central mould body (30) of the first mould part (18).

3. The method according to claim 1 or 2, wherein the cutter body (32) of the second mould part (19) is biased towards the retracted position by means of a spring element (36).

4. The method according to any of claims 1-3, wherein the abutment force between the rim portion press-surface (29a) of the first mould part (18) and the rim portion press-surface (25a) of the second mould part (19) during the step of engaging the rim portion (6a) of the cellulose product (2), is in the range 0,05-0,5 times the pressing force between the rim portion press-surface (29a) of the first mould part (18) and the rim portion press-surface (25a) of the second mould part (19) during the final pressing of the rim portion (6a) of the cellulose product (2).

5. The method according to any preceding claim, wherein the circumferential cutting edge (33) of the cutter body (32) of the second mould part (19) is in flush with the rim portion press-surface (29a) of the central mould body (30) of the first mould part (18) during the step of engaging the rim portion (6a) on opposite sides by the rim portion press-surface (29a) of the first mould part (18) and the rim portion press-surface (25a) of the second mould part (19).

6. Apparatus for dry manufacturing rigid cellulose products (2) having essentially non-flat general shape from a cellulose blank substrate (11), the cellulose product (2) comprising a main portion and a circumferential rim portion (6a) surrounding said main portion, wherein the apparatus (1) comprises a product forming unit (12),
- wherein the product forming unit (12) comprises a moulding tool having a first mould part (18) and a second mould part (19), wherein at least one of the first mould part (18) and the second mould part (19) is displaceable in the axial direction in relation to the other, wherein the first mould part (18) comprises a rim portion press-surface (29a) and the second mould part (19) comprises a rim portion press-surface (25a), said rim portion press-surface (29a) of the first mould part (18) being arranged opposite the rim portion press-surface (25a) of the second mould part (19) in order to press the rim portion (6a) of the cellulose product (2) therebetween,
- wherein the first mould part (18) comprises a central mould body (30) having the rim portion press-surface (29a) of the first mould part (18),
the apparatus being **characterized in that**
- the second mould part (19) comprises a central mould body (31) having the rim portion press-surface (25a) of the second mould part (19), and a cutter body (32) surrounding the central mould body (31) and having a circumferential cutting edge (33) located adjacent the rim portion press-surface (25a) of the central mould body (31), and the cutter body (32) being displaceable in the axial direction in relation to the central mould body (31) between a retracted position and an extended position, and wherein the cutter body (32) is biased towards the retracted position,
- wherein the cutter body (32) of the second mould part (19) is configured to cut-off residual cellulose material from the rim portion (6a) of the cellulose product (2) after the rim portion press-surface (29a) of the first mould part (18) and the rim portion press-surface (25a) of the second mould part (19) engage opposite sides of the rim portion (6a) of the cellulose product (2), having the cutter body (32) located in the retracted position, and wherein the cutter body (32) is configured to be positioned in the extended position before the rim portion press-surface (29a) of the first mould part (18) and the rim portion press-surface (25a) of the second mould part (19) press the rim portion (6a) of the cellulose product (2) into final rigid shape therebetween.

7. The apparatus (1) according to claim 6, wherein the total play in the radial direction between the central mould body (31) of the second mould part (19) and the cutter body (32) of the second mould part (19) is in the range 3,5-40 micrometres.

8. The apparatus (1) according to any of claims 6 or 7, wherein the play in the radial direction between the central mould body (30) of the first mould part (18) and the cutter body (32) of the second mould part (19) is in the range 10-40 micrometres.

9. The apparatus (1) according to any of claim 6-8, wherein the surface of the central mould body (30) of the first mould part (18) corresponding to the main portion of the cellulose product (2) is constituted by a negative mould surface, and wherein the surface of the central mould body (31) of the second mould part (19) corresponding to the main portion of the cellulose product (2) is constituted by a negative mould surface.

10. The apparatus (1) according to any of claim 6-8, wherein the surface of the central mould body (30) of the first mould part (18) corresponding to the main portion of the cellulose product (2) is constituted by a negative mould surface, and wherein the surface of the central mould body (31) of the second mould part (19) corresponding to the main portion of the cellulose product (2) is constituted by a positive mould surface.
